# EUROPÄISCHE PATENTSCHRIFT

(11) **EP 1 527 288 B1**
(45) Veröffentlichungstag und Bekanntmachung des Hinweises auf die Patenterteilung: **01.10.2008**
(21) Anmeldenummer: 03784135.0
(22) Anmeldetag: 01.08.2003
(51) Int. Cl.: F16D 48/06, B60W 10/18

(54) **MOBILES FAHRZEUG MIT EINER REIBUNGSKUPPLUNG UND EINEM INCH-PEDAL**
MOBILE VEHICLE COMPRISING A FRICTION CLUTCH AND AN INCH PEDAL
VEHICULE MOBILE A EMBRAYAGE A FRICTION ET PEDALE D'APPROCHE LENTE

(30) Priorität: 07.08.2002 DE 10236090
(43) Veröffentlichungstag der Anmeldung: 04.05.2005
(73) Patentinhaber: ZF Friedrichshafen AG, 88038 Friedrichshafen (DE)
(72) Erfinder: KÜHNER, Karl, 88048 Friedrichshafen (DE); SIEGER, Manfred, 88046 Friedrichshafen (DE); SOMMER, Norbert, 88255 Baienfurt (DE)
(86) Internationale Anmeldenummer: PCT/EP2003/008511
(87) Internationale Veröffentlichungsnummer: WO 2004/015293

(56) Entgegenhaltungen:
- US-A- 5 613 581
- US-B1- 6 371 885
- PATENT ABSTRACTS OF JAPAN vol. 014, no. 300 (M-0991), 28. Juni 1990 (1990-06-28) & JP 02 095938 A (TOYOTA AUTOM LOOM WORKS LTD;OTHERS: 01), 6. April 1990 (1990-04-06)

## Beschreibung

Die Erfindung betrifft ein mobiles Fahrzeug mit einem schaltbaren Getriebe, welches mindestens eine Reibungskupplung im Antriebsstrang aufweist, wobei die Reibungskupplung bei Betätigen eines Inch-Pedals gezielt in Schlupf gebracht wird, um die Fahrgeschwindigkeit des Fahrzeugs zu reduzieren. Dies ist insbesondere bei Arbeitsmaschinen, wie z. B. Radladern oder Staplern, notwendig, da bei diesen Fahrzeugen beim Aufnehmen von Lasten geringe Fahrgeschwindigkeiten gefordert sind, jedoch die Arbeitshydraulik in diesem Zustand die maximale Leistung benötigt. Für diesen Fahrzustand ist es notwendig, den Antriebsmotor auf der maximal möglichen Drehzahl zu halten, um die mit ihm verbundene Hydraulikpumpe mit maximaler Drehzahl betreiben zu können und die Reibungskupplung schlupfend zu betreiben, um die Fahrgeschwindigkeit zu verringern. Hierfür kann bei Betätigen des Inch-Pedals die Betätigungskraft der Reibungskupplung reduziert werden, wobei bei einem minimalen Betätigungsweg des Inch-Pedals die Betätigungskraft der Reibungskupplung nur geringfügig reduziert wird, bei weiterem Betätigungsweg des Inch-Pedals die Betätigungskraft der Reibungskupplung weiter reduziert wird und ab einem definierten Betätigungsweg des Inch-Pedals zur weiteren Reduzierung der Fahrgeschwindigkeit die Betriebsbremse des Fahrzeugs zusätzlich aktiviert wird. Die Reibungskupplung ist im schlupfenden Zustand der Gefahr der Beschädigung ausgesetzt, insbesondere, wenn die Reibleistung einen definierten Wert übersteigt. Dies kann beispielsweise durch fehlerhaftes Justieren des Inch-Pedals, und somit fehlerhafte Soll-Werten, geschehen.

Die WO 00/22323 offenbart ein unter Last schaltbares Wendegetriebe, bei welchem durch Betätigen eines hydraulischen Inch-Ventils der Druck in der Reibungskupplung so reduziert wird, dass diese in definierten Schlupfzustand übergeht. Insbesondere bei hydraulischen Inch-Ventilen ist es sehr aufwendig, diese zu justieren, was in Verbindung mit den Hysteresen dieser hydraulischen Ventile zu fehlerhaften Soll-Werten und zur Beschädigung der Reibungskupplung führt.

Die DE 198 30 950 A1 offenbart ein Verfahren und eine Vorrichtung zur Betätigung einer Kraftfahrzeug-Kupplungsvorrichtung, bei welcher über einen Drehwinkelsensor am Kupplungspedal oder an einem separaten Inch-Pedal eine Pedalstellung entsprechende Spannung erzeugt wird, welche in einem elektronischen Steuergerät verarbeitet wird. Diese Spannung wird über eine Inch-Pedal-Kennlinie in den Inch-Effekt gewandelt, welcher zwischen 0 % und 100 % liegt. Somit ist es möglich, die Wendekupplungsvorrichtung in gezielten Schlupf zu bringen. Um die Kupplung vor Beschädigung zu schützen, wird die Differenzdrehzahl der Kupplungsvorrichtung durch Variieren der Getriebeübersetzung im Inch-Betrieb moduliert. Dies ist jedoch nur bei stufenlos verstellbaren Getriebeeinheiten möglich und kann bei einem Lastschaltgetriebe mit festen Übersetzungsstufen nicht verwendet werden.

Ein Fahrzeug mit den Merkmalen der Oberbegriffs des unabhängigen Anspruchs ist bekannt aus US-A-5 613 581.

Der vorliegenden Erfindung liegt die Aufgabe zugrunde, ein mobiles Fahrzeug mit einem schaltbaren Getriebe mit festen Übersetzungsstufen und einer Reibungskupplung zu schaffen, bei welchem die Reibungskupplung gezielt in Schlupfzustand gebracht wird, und bei welcher die Reibungskupplung vor Beschädigung geschützt ist.

Die Aufgabe wird mit einem, auch die kennzeichnenden Merkmale des Hauptanspruchs aufweisenden, gattungsgemäßen mobilen Fahrzeug gelöst.

Erfindungsgemäß ist mit dem Inch-Pedal ein Wegaufnehmer verbunden, welcher in Abhängigkeit des Pedalwegs ein elektrisches Signal an eine elektronische Steuerung liefert, welche dieses Signal in eine Inch-Pedal-Kennlinie wandelt, welche zwischen 0 % und 100% liegt. 100 % Inch-Effekt bedeutet hierbei geöffnete Reibungskupplung und 0 % Inch-Effekt bedeutet geschlossene Reibungskupplung. Das elektrische Signal ist vorzugsweise eine Spannung, welche beispielsweise von einem Drehwinkelsensor am Inch-Pedal erzeugt werden kann. Um eine aufwendige Justierung des Wegaufnehmers am Inch-Pedal zu vermeiden, ist es ausreichend, den Wegaufnehmer so am Inch-Pedal zu montieren, dass der Bewegungsweg des Inch-Pedals innerhalb des Bewegungswegs des Wegaufnehmers liegt. Um die Anfangs- und Endsignale des Wegaufnehmers in der elektrischen Steuerung zuordnen zu können, wird vorzugsweise bei der Erstinbetriebnahme des Fahrzeugs der Wegaufnehmer elektronisch justiert. Hierzu wird über die elektronische Steuerung der Justiervorgang gestartet, anschließend wird das Inch-Pedal vollständig durchgetreten und anschließend langsam wieder in die Ausgangsposition zurückbewegt. Vorzugsweise wird beim langsamen Zurückbewegen des Inch-Pedals kontinuierlich der vom Wegaufnehmer gelieferte Wert mitgemessen, um eventuelle Fehlsignale, z. B. hervorgerufen durch wackelndes Gestänge, auszuschließen. Die Endlagen des Inch-Pedals werden dann in der elektronischen Steuerung der Kennlinie 0 % und 100 % Inch-Effekt zugeordnet. Somit entfällt eine mechanische Justierung des Wegaufnehmers vollständig. Dadurch ist es nicht mehr mögliche dass die Reibungskupplung durch falsche Justage des Wegaufnehmers beschädigt werden kann.

Durch die Erfindung kann mit dem zuvor beschriebenen System auf einfache Weise der maximale Inch-Effekt,und somit die minimale Betätigungskraft der Kupplung, an welcher die Kupplungslamellen gerade zu schleifen beginnen, einem definierten Betätigungszustand der Betriebsbremse zugeordnet werden. Indem der Wegaufnehmer für die Inch-Funktion und der Wegaufnehmer für die Betriebsbremse an einem Inch-Pedal angeordnet sind und in einem ersten Wegbereich alleinig die Inch-Funktion verwendet und ab einem definierten Wegbereich am Inch-Pedal die Betriebsbremse zugeschaltet wird, ist es notwendig, in der elektronischen Steuerung den Pedalweg exakt den Funktionen "Inchen" und "Betriebsbremse" zuordnen zu können. Zusätzlich besteht das Problem, dass der Punkt, an dem die Betriebsbremse zugeschaltet wird, je nach Kundenwunsch unterschiedlich sein kann. Fehlerhafte Einstellungen könnten eine Beschädigung der Kupplung herbeiführen.

Bei der erfindungsgemäßen Anordnung des Wegaufnehmers ist eine einfache Justierung und Einstellung der Betriebsbremse zur Inch-Funktion möglich. Hierzu wird das Fahrzeug auf einem nahezu waagerechten Gelände bewegt. Der Justiervorgang wird gestartet und vorzugsweise fordert eine Anzeige den Bediener für weitere Aktionen auf. Nachdem die Antriebsmotordrehzahl auf einen definierten Wert, vorzugsweise die maximale Drehzahl eingestellt und die Betriebsbremse betätigt ist, wird der Vorgang gestartet. Durch langsames Lösen der Betriebsbremse setzt sich das Fahrzeug in Bewegung. Während dieses Justiervorgangs bleibt die Kupplungskraft innerhalb des Inch-Effekts 0 % bis 100% konstant eingestellt. Durch weiteres Durchtreten des Inch-Pedals wird die Betriebsbremse aktiviert und hierdurch das Fahrzeug verzögert. Durch Messung der Fahrzeugbewegung ist der Bremszeitpunkt über dem Pedalweg des Inch-Pedals bekannt und wird in der elektronischen Steuerung gespeichert. Der maximale Inch-Effekt, 100 %, bei welchem die Lamellen der Reibungsbremse gerade anliegen und was einer minimalen Betätigungskraft der Kupplung entspricht, wird in der elektronischen Steuerung in Abhängigkeit des Pedalwegs ebenfalls abgelegt und kann, wie beispielsweise in der WO 01/65227 A1 oder in der DE 198 26 097 A1, bestimmt werden. Da nun der elektronischen Steuerung die minimale Betätigungskraft der Reibungskupplung und somit der Punkt 100% Inch-Effekt mit zugehöriger Inch-Pedal-Stellung und die Inch-Pedal-Stellung, bei welcher die Betriebsbremse aktiviert wird, bekannt ist, kann durch Festlegung von Kennlinien der Überschneidungspunkt des Inch-Drucks zum Bremsdruck der Betriebsbremse programmiert und somit eingestellt werden.

In einer weiteren Ausgestaltungsform wird die minimale Reduzierung der Betätigungskraft der Reibungskupplung so begrenzt, dass die Reibungskupplung beim Beginn des Inchens, und somit einem Inch-Effekt größer 0 %, auch bei längerem Betreiben der Kupplung im Schlupfzustand nicht beschädigt wird. Somit wird beim Beginn des Inchens die Betätigungskraft der Kupplung von der vollen Betätigungskraft direkt auf diese definierte Betätigungskraft, Beginn Inchen, reduziert. Beim weiteren Durchtreten des Inch-Pedals wird die Betätigungskraft weiter reduziert, wodurch sich jedoch auch die Reibleistung nur weiter reduziert und die Reibungskupplung nicht beschädigt werden kann.

In einer weiteren Ausgestaltungsform der Erfindung erkennt die elektronische Steuerung, ob das Inch-Pedal in Richtung "mehr Inchen" oder das Inch-Pedal in Richtung "weniger Inchen" bewegt wird. Da die Inch-Funktion vorzugsweise in Arbeitsmaschinen eingesetzt wird, welche auch in unebenem Gelände betrieben werden können, ist es nicht auszuschließen, dass aufgrund des unebenen Geländes der Fahrer ungewollte Bewegungen am Inch-Pedal ausführt. Damit sich die Betätigungskraft der Reibungskupplung infolge ungewollter Bewegungen des Inch-Pedals nicht verändert, ist beim Wechsel von der Funktion "mehr Inchen", und somit geringerer Betätigungskraft der Reibungskupplung, und der Funktion "weniger Inchen", und somit höherer Betätigungskraft der Reibungskupplung, eine Filterung vorhanden, so dass die Funktion "mehr Inchen" auf die Funktion "weniger Inchen" erst bei einem voreingestellten Pedalweg des Inch-Pedals umschaltet. Ebenso ist dieser voreingestellte Mindestweg in der Gegenrichtung vorhanden.

In einer weiteren Ausgestaltungsform der Erfindung, insbesondere bei hydraulischen Betätigungseinrichtungen der Reibungskupplung, werden unterschiedliche Kennlinien für den Betätigungsdruck der Betätigungseinrichtung für die Funktionen "mehr Inchen", und somit geringerer Betätigungsdruck, und die Funktionen "weniger Inchen", und somit größerer Betätigungsdruck, verwendet. Durch die Verwendung unterschiedlicher Kennlinien für diese beiden Funktionen kann sich die Hysterese, welche in der mechanischen-hydraulischen Ansteuerung und Betätigung der Reibungskupplung vorhanden ist und insbesondere beim Umschalten von weniger Betätigungsdruck auf mehr Betätigungsdruck und dem Umschalten in der Gegenrichtung nicht nachteilig auswirken. Indem diese Hysterese eliminiert wird, indem unterschiedliche Kennlinien für die Betätigungsrichtungen verwendet werden, ist bei Veränderung des Inch-Pedal-Wegs und der Pedalrichtung eine sofortige Veränderung des übertragbaren Drehmoments spürbar.

In einer weiteren Ausgestaltungform der Erfindung wird der Übergang dieser beiden Kennlinien bei Änderung der Bewegungsrichtung des Inch-Pedals kontinuierlich ausgeführt, wodurch keinerlei Schaltstöße im Fahrzeug vorhanden sind. In einer weiteren Ausgestaltungsform der Erfindung wird oberhalb einer definierten Betätigungsgeschwindigkeit des Inch-Pedals die Veränderung der Betätigungskraft begrenzt, um einen unerwünschten und ungewollten Schaltruck, z. B. infolge des Abrutschens vom Inch-Pedal und somit dem sofortigen Zurückspringen des Inch-Pedals, zu verhindern. Die Veränderung der Betätigungskraft erfolgt in solchen Fällen kontinuierlich.

In einer weiteren Ausgestaltungsform der Erfindung erfolgt der Übergang von der geschlossenen Kupplung, und somit der Kupplung mit der maximalen Betätigungskraft auf den Beginn des Inchens und somit den minimalen Inch-Effekt, kontinuierlich, wodurch das Fahrverhalten verbessert und die Belastung der Reibungskupplung minimiert wird. Ebenso erfolgt der Übergang in Gegenrichtung kontinuierlich.

In einer weiteren Ausgestaltungsform der Erfindung wird die Reibleistung kontinuierlich aus der Zeit, der Differenzdrehzahl der Kupplung und der Betätigungskraft der Kupplung errechnet, und bei Überschreiten einer zuvor definierten, zulässigen Reibleistung wird die Betätigungskraft der Kupplung erniedrigt, was beispielsweise durch Reduzieren des Kupplungsdrucks geschehen kann, wodurch die Kupplung vor Beschädigungen geschützt ist. Somit ist es möglich, auf einfache Weise die Funktion "Inchen" im Fahrzeug zu verwenden, den Wegaufnehmer zu justieren, fehlerhafte Betätigungen des Inch-Pedals auszuschließen, Schaltstöße und eine Beschädigung der Kupplung zu verhindern, und somit einen zuverlässigen Betrieb im Fahrzeug zu gewährleisten.

Weitere Merkmale sind der Figuren-Beschreibung zu entnehmen.

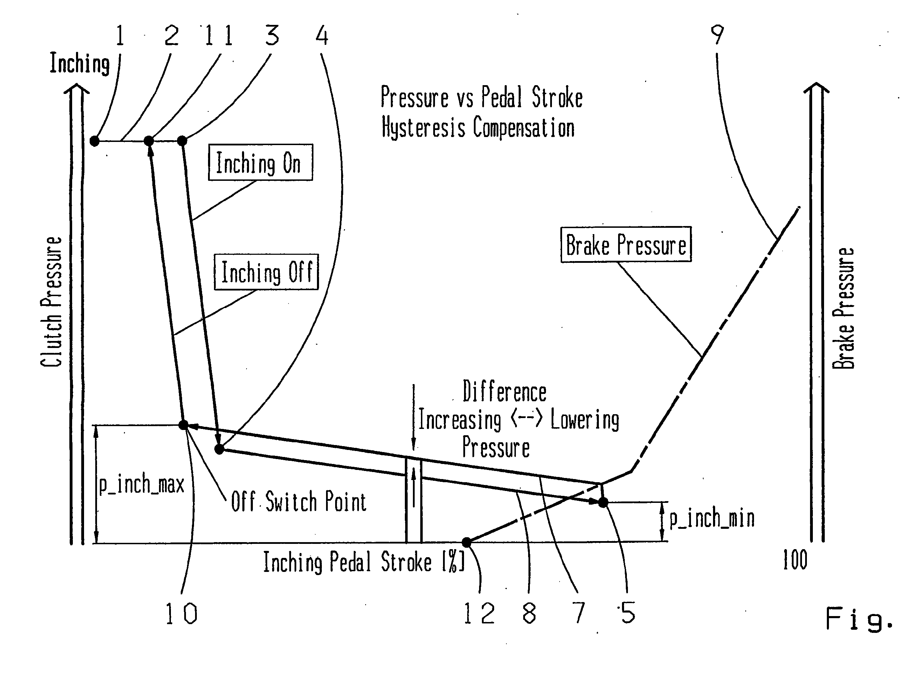

Die einzige Figur zeigt den Verlauf eines Inch-Vorgangs über dem Pedalweg des Inch-Pedals.

Das Diagramm ist für eine hydraulisch betätigte Lamellenkupplung und eine hydraulisch betätigte Betriebsbremse dargestellt. Die Lamellenkupplung und die Betriebsbremse werden über hydraulischen Druck im Schließsinne betätigt. Der Druck für die hydraulische Kupplung und die hydraulische Bremse ist auf der Ordinate, der Pedalweg des Inch-Pedals ist auf der Abszisse dargestellt. Befindet sich das Inch-Pedal in seiner Ausgangsstellung 1, so ist die Reibungskupplung mit maximalem Druck beaufschlagt und somit geschlossen, was an der Linie 2 ersichtlich ist. Bis zu dem Startpunkt Inchen 3 ist das Inch-Pedal durchzutreten, ohne dass sich der Kupplungsdruck ändert. Wird das Inch-Pedal weiter als bis zum Startpunkt Inchen 3 durchgetreten, wird der Kupplungsdruck kontinuierlich bis zu Beginn Inchen 4 abgesenkt. Der Kupplungsdruck Beginn Inchen 4 ist zuvor definiert und ist abhängig von der Leistungsfähigkeit der Kupplung, bei welcher das Fahrzeug über eine längere Zeitspanne mit schleifender Kupplung betrieben werden kann, ohne dass die Kupplung beschädigt wird. Bei weiterem Durchtreten des Inch-Pedals reduziert sich der Kupplungsdruck der Reibungskupplung weiter, bis er einen minimalen Kupplungsdruck 5 erreicht, bei welchem die Lamellen der Kupplung gerade anliegen. Dieser Kupplungsdruck kann nicht mehr durch das Inch-Pedal weiter reduziert werden. Wird nun das Inch-Pedal in der Gegenrichtung, also in Richtung Ausgangsposition, zurückbewegt, so wird der Kupplungsdruck sofort um einen definierten Wert erhöht, wodurch die Kupplungsbetätigungskraft gleich bleibt, jedoch bei weiterer Erhöhung der Kupplungskraft infolge einer Bewegung des Inch-Pedals in Richtung Ausgangsposition die Betätigungseinrichtung sofort die Kupplung weiter im Schließsinne betätigt, da die Hysterese infolge der Betätigung der Bauteile durch die Verwendung einer Schließkennlinie 7 kompensiert ist. Indem das Inchen im Schließsinne auf der Schließkennlinie 7 und im Öffnungssinne auf der Öffnungskennlinie 6 erfolgt, wird die Hysterese der Bauteile eliminiert, wodurch ein sofortiges Ansprechverhalten der Inch-Funktion an den Fahrer weitergegeben wird. Fehlbedienungen des Fahrers infolge zu weit durchgetretenem oder losgelassenem Inch-Pedal entfallen somit. Erreicht das Inch-Pedal den Bewegungspunkt 8, so wird die Betriebsbremse mit aktiviert, was an der Linie 9 ersichtlich ist. Erreicht die Schließkennlinie 7 den Punkt 10, welcher ebenfalls so definiert ist, dass die Reibungskupplung bei längerem Betrieb nicht beschädigt wird, und das Inch-Pedal wird weiter in Richtung Ausgangsposition bewegt, so wird der Kupplungsdruck kontinuierlich bis zum maximalen Kupplungsdruck erhöht, wodurch die Kupplung vollständig schließt. Wird die Kupplung unzulässig lange im schlupfenden Zustand betrieben, so wird die Kupplung automatisch im Öffnungssinne betätigt. Das Inch-Pedal muß zum Starten des Inch-Vorgangs weiter durchgetreten werden als beim Verlassen des Inch-Vorgangs. Die Differenz zwischen dem Startpunkt Inchen 3 und dem Endpunkt Inchen 11 bewirkt, dass sich beim Fahren in unebenem Gelände eine kurzzeitige Fehlbedienung des Fahrpedals nicht negativ auswirkt. Durch die elektronische Justierung des Wegaufnehmers und der Erfassung des Startpunktes 12 der Betriebsbremse ist es möglich, in der elektronischen Steuerung die Inch-Funktion, je nach Wunsch, zur Kennlinie der Betriebsbremse 9 einzustellen, wodurch, je nach Programmierung, die Betriebsbremse früher oder später zugeschaltet wird.

### Bezugszeichen

- 1: Ausgangsstellung
- 2: Linie
- 3: Startpunkt Inchen
- 4: Beginn Inchen
- 5: minimaler Kupplungsdruck
- 6: Öffnungskennlinie
- 7: Schließkennlinie
- 8: Bewegungspunkt
- 9: Linie
- 10: Punkt
- 11: Endpunkt Inchen
- 12: Startpunkt

## Patentansprüche

1. Mobiles Fahrzeug mit einem schaltbaren Getriebe mit festen Übersetzungsstufen, mit durch Betätigungskraft schließbarer Reibungskupplung, mit einem Inch-Pedal, dessen Pedalweg von einem Wegaufnehmer aufgenommen und einer elektronischen Steuereinrichtung zugeführt wird, wobei bei Betätigung des Inch-Pedals die elektronische Steuereinrichtung in Abhängigkeit des Pedalwegs die Betätigungskraft der Lamellenkupplung reduziert und diese **dadurch** in einen Schlupfzustand gebracht wird, und wobei die Ausgangslage und die Endlage des Inch-Pedals von der elektronischen Steuereinrichtung erfaßt und einer Inch-Kenn-linie zugeordnet wird, **dadurch gekennzeichnet, dass** der Pedalweg des Inch-Pedals innerhalb des Bewegungswegs des Wegaufnehmers liegt,
wobei die Ausgangslage und die Endlage des Inch-Pedals der Kennlinie 0% und 100% Inch-Effekt zugeordet werden, indem der Wegaufnehmer elektronisch justiert wird, und der Inch-Pedal-Weg, bei welchem eine Betriebsbremse über das Inch-Pedal aktiviert wird, mittels welcher das Fahrzeug verzögert wird, von der elektronischen Steuerung durch Messung einer Bewegungsänderung des Fahrzeugs erkannt und gespeichert wird, wobei sich das Fahrzeug während der Erkennung der Bewegungsänderung bei einer definierten Antriebsmotordrehzahl und während dieses Justiervorgangs konstant bleibender Kupplungskraft, in Bewegung befindet.

2. Mobiles Fahrzeug mit einem schaltbaren Getriebe nach Anspruch 1, **dadurch gekennzeichnet, dass** der Überschneidungspunkt der Inch-Kennlinie zu einer Betriebsbrems-Kennlinie einstellbar ist.

## Claims

1. Mobile vehicle with an engaging and disengaging transmission with fixed gear ratios, with a control-force-lockable friction clutch, with an inching pedal, the travel of which is picked up by a travel sensor and fed to an electronic CU, with the electronic CU being caused by the actuation and the travel of the inching pedal to reduce the actuating force of the multidisk clutch, which results in a slip condition of the latter, and with starting and end position of the inching pedal being registered by the electronic CU and assigned to an inching characteristic, **characterized in that** the inching pedal travel is within the travel sensor's path, with **starting** and end position of the inching pedal being assigned to 0 % characteristic and 100% inching effect, with the travel sensor being electronically adjusted, and with the inching pedal travel, during which a service brake is activated by the inching pedal, through which the vehicle is decelerated, being registered and stored by the electronic CU through measurement of the changed vehicle movement, with the vehicle being in motion during recognition of the changed movement at a defined driving-engine speed and a constant clutch force during this adjustment process.

2. Mobile vehicle with an engaging and disengaging transmission according to claim 1, **characterized in that** the point of intersection of inching characteristic and service brake characteristic can be set.

## Revendications

1. Véhicule mobile doté d'une boîte de vitesses couplable présentant des étages de démultiplication fixes, un embrayage à friction pouvant être fermé par une force d'actionnement, doté d'une pédale d'approche lente, dont la course est enregistrée par un capteur de déplacement et transmise à un commande électronique, sachant que par l'actionnement de la pédale d'approche lente la commande électronique réduit en fonction de la course de la pédale la force d'actionnement de l'embrayage à disques et amenant celui-ci dans un état de patinage et sachant que la position initiale et la position finale de la pédale d'approche lente sont enregistrées par la commande électronique et affectées à une loi d'approche lente, **caractérisé en ce que** la course de la pédale d'approche lente se trouve dans la course de déplacement du capteur de déplacement, sachant que la position initiale et la position finale de la pédale d'approche lente sont affectées à la loi de l'effet d'approche lente de 0% à 100 % et cela par un ajustage électronique du capteur de déplacement et **en ce que** la course de la pédale d'approche lente - lors de laquelle un frein de service est activé par l'intermédiaire de la pédale d'approche lente, à l'aide duquel le véhicule est décéléré - est reconnue par la commande électronique par mesure d'une variation du déplacement du véhicule et ensuite enregistrée, sachant que le véhicule étant en déplacement lors de la reconnaissance de la variation de déplacement avec un régime d'entrée du défini et la force d'embrayage étant constante pendant cette opération d'ajustage.

2. Véhicule mobile doté d'une boîte de vitesses couplable selon la revendication 1, **caractérisé en ce qu'**il est possible de régler le point de chevauchement de la loi d'approche lente par rapport à une loi du frein de service.
